(19) Europäisches Patentamt
European Patent Office
Office européen des brevets

(11) **EP 2 745 077 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
*G01C 21/16* ^(2006.01)   *G01C 19/5776* ^(2012.01)

(21) Anmeldenummer: **12729540.0**

(22) Anmeldetag: **19.06.2012**

(86) Internationale Anmeldenummer:
**PCT/EP2012/061657**

(87) Internationale Veröffentlichungsnummer:
**WO 2013/023815 (21.02.2013 Gazette 2013/08)**

(54) **VERFAHREN ZUR AUSWERTUNG VON AUSGANGSSIGNALEN EINER DREHRATENSENSOREINHEIT UND DREHRATENSENSOREINHEIT**

METHOD OF EVALUATING SIGNALS SUPPLIED BY A ROTATIONAL RATE SENSOR UNIT AND ROTATIONAL RATE SENSOR UNIT

PROCÉDÉ D'ÉVALUATION DE SIGNAUX FOURNI PAR UNE UNITÉ DE CAPTEUR DE TAUX DE ROTATION ET UNITÉ DE CAPTEUR DE TAUX DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2011 DE 102011081049**

(43) Veröffentlichungstag der Anmeldung:
**25.06.2014 Patentblatt 2014/26**

(73) Patentinhaber: **Robert Bosch GmbH 70442 Stuttgart (DE)**

(72) Erfinder:
• **BARTHOLOMEYCZIK, Julian 72762 Reutlingen (DE)**
• **CLAUS, Thomas 72072 Tuebingen (DE)**

(56) Entgegenhaltungen:
**US-A1- 2002 008 661   US-A1- 2005 197 769
US-A1- 2009 326 851   US-B1- 6 421 622
US-B1- 7 587 277**

**Beschreibung**

Stand der Technik

Die Erfindung geht aus von einem Verfahren zur Auswertung von Ausgangssignalen einer Drehratensensoranordnung und von einer Drehratensensoranordnung.

Solche Drehratensensoranordnungen sind allgemein bekannt. Beispielsweise ist aus der Druckschrift DE 101 08 196 A1 ein Drehratensensor mit Coriolis-Elementen zur Messung einer Winkelgeschwindigkeit bekannt, wobei ein erstes und ein zweites Coriolis-Element über eine Feder miteinander verbunden sind und zu Schwingungen parallel zu einer ersten Achse angeregt werden, wobei ein erstes und ein zweites Detektionsmittel eine Auslenkung des ersten und zweites Coriolis-Elements aufgrund einer auf die Coriolis-Elemente wirkenden Corioliskraft detektieren, so dass die Differenz aus einem ersten Detektionssignal des ersten Detektionsmittels und einem zweiten Detektionssignal des zweiten Detektionsmittels abhängig von der Corioliskraft und somit auch abhängig von der anliegenden Winkelgeschwindigkeit ist.

Aus der Druckschrift DE 10 2007 060 942 A1 ist ferner ein mehrkanaliger Drehratensensor bekannt, welcher zur Vermessung von Drehraten um senkrecht zueinander stehende Drehachsen geeignet ist. Insbesondere sind dreikanalige Drehratensensoren oder Anordnungen von Drehratensensoren bekannt, welche eine Vermessung um drei voneinander unabhängige Drehachsen ermöglichen. Solche Drehratensensoren oder Anordnungen von Drehratensensoren dienen beispielsweise zur Bestimmung der Lage eines portablen Gerätes, wie einem Mobiltelefon, einem Tablet-Computer oder dergleichen, gegenüber einem Referenzsystem. Die Berechnung Lageänderung erfolgt dabei in Abhängigkeit der von den Drehratensensoren gemessenen und als Ausgangssignal zur Verfügung gestellten Winkeländerungen.

Ein Verfahren zur Berechnung der Lageänderung geht beispielsweise aus der Druckschrift US 3 231 726 A hervor. Da Winkeländerungen nicht kommutativ sind, ist es nötig, die Ausgangssignale der Drehratensensoren mit einer hohen Abtastrate vom Drehratensensor auszulesen. Diese Abtastrate muss deutlich über dem Frequenzbereich liegen, in welchem sich die zu vermessenden Bewegungen befinden. Auf diese Weise werden komplexe Rotationen (Rotationen um drei Achsen) in viele kleinere Rotationen aufgeteilt. Menschliche Bewegungen befinden sich zum Beispiel im Frequenzbereich kleiner 20 Hz. Eine fehlerfreie Aufintegration dieser Signale erfordert typischerweise eine Abtastrate von 100 Hz. Nachteilig ist, dass aufgrund der hohen Abtastraten der Hauptprozessor der portablen Geräte vergleichsweise häufig aktiv sein muss, um die Ausgangssignale der Drehratensensoren auszulesen und weiterzuverarbeiten. Hieraus resultierte ein vergleichsweise großer Stromverbrauch. Insbesondere in portablen Geräten führt dies aufgrund nur begrenzter Batteriekapazitäten zu einer Verringerung der Batterielaufzeit des portablen Geräts.

Eine Trägheitssensoreinheit mit drei Winkelgeschwindigkeitssensoren, die Winkelgeschwindigkeiten um orthogonale Achsen sensieren können, ist zusätzlich aus Druckschrift US 2009/326851 A1 bekannt. Dabei wird in Abhängigkeit eines n-Tupels von gemessenen Winkelgeschwindigkeitswerten ein Zwischenvektor bestimmt, und in Abhängigkeit des Zwischenvektors und eines früheren Orientierungsänderungsvektors ein neuer Orientierungsänderungsvektor berechnet. Die Verfahrensschritte werden wiederholt. Die Orientierungsänderungsvektoren werden von einer externen Datenverarbeitungseinheit ausgelesen.

Offenbarung der Erfindung

Anspruch 1 definiert ein erfindungsgemäßes Verfahren. Anspruch 8 definiert eine erfindungsgemäße Drehratensoreinheit.

Das erfindungsgemäße Verfahren und die erfindungsgemäße Drehratensensoreinheit gemäß den nebengeordneten Ansprüchen haben gegenüber dem Stand der Technik den Vorteil, dass der Datentransfer zwischen der Drehratensensoreinheit und der externen Datenverarbeitungseinheit, sowie der Energieverbrauch erheblich gesenkt wird. Hierdurch ist vorzugsweise die Batterielaufzeit erheblich zu steigern, wenn das erfindungsgemäßen Verfahren beispielsweise in einem batteriebetriebenen portablen Gerät Verwendung findet. Diese Vorteile werden dadurch erreicht, dass die Ausgangssignale des Drehratensensors oder der Mehrzahl von Drehratensensoren bereits in der Drehratensensoreinheit in einer vergleichsweise einfachen Weise aufgearbeitet werden, indem die Winkelgeschwindigkeitswerte sofort in den stets aktualisierten neuen Orientierungsänderungswert unter Berücksichtigung des im Register abgespeicherten früheren Orientierungsänderungswerts umgerechnet werden. Dieser neue Orientierungsänderungswert beinhaltet stets die Information über die letzte Lageänderung der Drehratensensoreinheit. Der aktuelle Orientierungsänderungswert wird durch ein mehrfaches Wiederholen der Schleifen aus erstem, zweitem, drittem und viertem Verfahrensschritt sukzessive aufsummiert, so dass sämtliche Lageänderungsinformationen in dem aktuellen neuen Orientierungsänderungswert repräsentiert werden. Die externe Datenverarbeitungseinheit, beispielsweise der Hauptprozessor des portablen Gerätes, braucht vorteilhafterweise nur noch den einen aktuellen Orientierungsänderungswert auszulesen, um die seit dem letzten Auslesen erfolgten Lageänderungen zu registrieren. Hierfür ist eine deutlich geringere Abtastrate ausreichend, da nicht mehr alle während einer Schleife anfallenden Informationen ständig abgefragt werden müssen. Dies bedeutet, dass im Vergleich zum Stand der Technik eine geringere Datenmenge übertragen werden muss und eine längere Verweildauer der externen Datenverarbeitungseinheit in einem Energiespar- oder Ruhemodus ermöglicht wird, wodurch der Energieverbrauch gesenkt und somit insbesondere die Batterielaufzeit des portablen Gerätes erhöht wird. Ferner wird der Orientierungsänderungswert anhand einer Schwellwertüberwachung überwacht, so dass Fehler und Ungenauigkeiten im Orientierungsänderungswert, welche zum Beispiel aus Rundungsfehlern oder Näherungsrechnungen resultieren, auf ein vorausgewähltes Maximalmaß zu reduzieren sind. Der im Register gespeicherte frühere Orientierungsänderungswert wird im vierten Verfahrensschritt bei jeder Schleife mit dem neuen Orientierungsänderungswert vorzugsweise überschrieben. Das n-Tupel von Winkelgeschwindigkeiten umfasst vorzugsweise eine einzige Winkelgeschwindigkeit um eine Drehachse (n=1) oder drei Winkelgeschwindigkeiten um drei voneinander unabhängige Drehachsen (n=3). Bei einer Vermessung in mehr als eine Raumrichtung werden die Winkelgeschwindigkeitswerte beispielsweise mittels eines einzigen mehrkanaligen Drehratensensors oder mittels mehrerer einkanaliger Drehratensensoren gemessen. Die Drehratensensoren umfassen vorzugsweise mikromechanische Drehratensensoren auf einem Halbleitersubstrat, welche im Rahmen eines Halbleiterherstellungsprozesses hergestellt wurden. In einer alternativen Ausführungsform wäre auch denkbar, dass jeder neue Orientierungswert in jeder Schleife zusätzlich auch in einem beispielsweise als FiFo (First-In-First-Out) ausgebildeten Ausgangsregister abgelegt wird, aus welchem sie nacheinander vorzugsweise entsprechend der zeitlichen Reihenfolge ihrer Speicherung von der externen Datenverarbeitungseinheit auslesbar sind. Vorteilhafte Ausgestaltungen und Weiterbildungen der Erfindung sind den Unteransprüchen, sowie der Beschreibung unter Bezugnahme auf die Zeichnungen entnehmbar. Erfindungsgemäß ist vorgesehen, dass nach Durchführung des sechsten Verfahrensschrittes der im Register gespeicherte Orientierungsänderungswert in einem siebten Verfahrensschritt auf einen Ursprungswert gesetzt wird und das Verfahren mit dem ersten Verfahrensschritt erneut gestartet wird. Der Ursprungswert umfasst vorzugsweise eine Art Nullwert, d.h. dass keine Änderung der Orientierung erfolgt ist. In vorteilhafter Weise wirken sich Fehler, die während der Berechnung des jeweiligen Orientierungsänderungswertes entstanden sind, nach der Zurücksetzung des im Register gespeicherten Orientierungsänderungswertes nicht mehr auf die Berechnung des neuen Orientierungsänderungswertes in der nachfolgenden Schleife aus. Der maximal auftretende Fehler lässt sich auf diese Weise begrenzen. Ein auf Null gesetzter Orientierungsänderungswert, welcher als Orientierungsänderungsvektor in Form eines Quaternions ausgedrückt wird, bedeutet, dass keine Lageänderung erfolgt ist und sieht insbesondere wie folgt aus:

$$q_{l,0} = \begin{pmatrix} 1 \\ 0 \\ 0 \\ 0 \end{pmatrix}$$

Erfindungsgemäß ist vorgesehen, dass der Orientierungsänderungswert einen Orientierungsänderungsvektor, insbesondere ein Quaternion, umfasst. In vorteilhafter Weise ist somit eine Lageänderung im dreidimensionalen Raum vergleichsweise einfach darstellbar und weiter zu verarbeiten. Die Verwendung eines auf Quaternionen basierenden Zahlensystems hat den Vorteil, dass Drehungen im dreidimensionalen Raum besonders einfach und effizient darstellbar und weiter zu verarbeiten sind. Jedes Quaternion umfasst vier skalare Zahlenwerte, so dass das Register insbesondere zur Speicherung von vier Werten pro Schleife ausgelegt ist.

Gemäß einer bevorzugten Ausführungsform ist vorgesehen, dass im sechsten Verfahrensschritt überwacht wird, ob die Länge des im dritten Verfahrensschritt berechneten Orientierungsänderungsvektors einen konfigurierbaren und/oder vorbestimmten Schwellwert überschreitet. Der Orientierungsänderungsvektor soll lediglich die Änderung der Orientierung angeben. Hierzu soll der Orientierungsvektor die Länge (auch als Norm oder Betrag des Vektors) eins haben, d.h. $|\vec{q}| = 1$, wobei $\vec{q}$ der Orientierungsänderungsvektor in Form des Quaternion ist. Durch eine vorzugsweise nur näherungsweise Berechnung des Zwischenwertes ist eine Abweichung des Betrags des Orientierungsänderungsvektors von eins möglich. Ein solcher Fehler summiert sich mit jeder Schleife von ersten, zweiten, dritten und vierten Verfahrensschritten zunehmend auf. Daraus resultiert eine fehlerhafte Berechnung des neuen Orientierungsänderungswertes im dritten Verfahrensschritt. In vorteilhafter Weise wird dieser Effekt minimiert, indem die Länge des neuen Orientierungsänderungswertes überwacht und mit einem konfigurierbarem und/oder vorbestimmtem Schwellwert verglichen wird. Wenn der Schwellwert überschritten wird, wird der im Register gespeicherte frühere Orientierungsänderungswert im Ausgangsregister zwischengespeichert und/oder von der externen Datenverarbeitungseinheit ausgelesen und anschließend auf den Nullwert gesetzt. Denkbar ist ferner, dass ein Interrupt von der Drehratensensoreinheit an die externe Datenverarbeitungseinheit übergeben wird und/oder dass der neue Orientierungsänderungswert von der externen Datenverarbeitungseinheit noch ausgelesen wird oder in dem Ausgangsregister gespeichert wird.

Gemäß einer bevorzugten Ausführungsform ist vorgesehen, dass die Anzahl der durchgeführten dritten Verfahrensschritte seit der im Register gespeicherte frühere Orientierungsänderungswert zuletzt auf den Ursprungswert gesetzt wurde mittels eines Zählers gezählt wird und wobei im sechsten Verfahrensschritt überwacht wird, ob der Zähler einen konfigurierbaren und/oder vorbestimmten weiteren Schwellwert überschreitet. Aufgrund einer vorzugsweise nur näherungsweisen Berechnung des Zwischenwertes nimmt die Gefahr, dass der Orientierungsänderungswert Fehler aufweist, mit jeder Schleife von ersten, zweiten, dritten und vierten Verfahrensschritten zu. Ferner summieren sich die Einzelfehler mit jeder Schleife von ersten, zweiten, dritten und vierten Verfahrensschritten auf. Eine Beschränkung der maximalen Anzahl von möglichen Schleifen von ersten, zweiten, dritten und vierten Verfahrensschritten, ohne dass zwischenzeitlich der im Register gespeicherte frühere Orientierungsänderungswert zurückgesetzt wird, sorgt in vorteilhafter Weise dafür, dass der Fehler auf ein vertretbares Maximalmaß begrenzt wird. Sobald die maximal mögliche Anzahl von Schleifen erreicht ist, wird der neue Orientierungsänderungswert im Ausgangsregister zwischengespeichert und/oder von der externen Datenverarbeitungseinheit ausgelesen und anschließend der im Register gespeicherte frühere Orientierungsänderungswert auf Null gesetzt, so dass der nachfolgend berechnete Orientierungsänderungswert nicht auf früheren Näherungsfehlern aufbaut. Denkbar ist ferner, dass ein Interrupt von der Drehratensensoreinheit an die externe Datenverarbeitungseinheit übergeben wird. Erfindungsgemäß ist vorgesehen, dass in einem neunten Verfahrensschritt der neue und/oder der frühere Orientierungswert in einem von der externen Datenverarbeitungseinheit auslesbaren Ausgangsregister gespeichert wird, wenn im sechstens Verfahrensschritt eine Schwellwertüberschreitung detektiert wird. Dies hat den Vorteil, dass die Lageänderung im Ausgangsregister zwischengespeichert wird, bevor der im Register gespeicherte frühere Orientierungsänderungswert durch das Zurücksetzen auf den Ursprungswert verworfen wird. Es wird somit sichergestellt, dass keine eine Lageänderung beschreibenden Werte verloren gehen. Das Ausgangsregister ist nun unmittelbar oder zu einem späteren Zeitpunkt von der externen Datenverarbeitungseinheit auslesbar.

Gemäß einer bevorzugten Ausführungsform ist vorgesehen, dass im zweiten Verfahrensschritt der Zwischenwert als lineare Funktion des n-Tupels von Winkelgeschwindigkeitswerten berechnet wird. In vorteilhafter Weise ist eine lineare Funktion wesentlich einfacher, insbesondere in Form einer Schaltung (d.h. in Hardware), zu implementieren, als eine trigonometrische Funktion, welche üblicherweise zur Berechnung von Orientierungsänderungsvektoren, vorzugsweise Quaternionen, verwendet werden. Die Näherung durch eine lineare Funktion erfolgt insbesondere wie folgt:

$$q_l = \begin{pmatrix} \cos(|\vec{\omega}| \cdot T/2) \\ \omega_x/|\vec{\omega}| \cdot \sin(|\vec{\omega}| \cdot T/2) \\ \omega_y/|\vec{\omega}| \cdot \sin(|\vec{\omega}| \cdot T/2) \\ \omega_z/|\vec{\omega}| \cdot \sin(|\vec{\omega}| \cdot T/2) \end{pmatrix} \approx \begin{pmatrix} 1 \\ \omega_x \cdot T/2 \\ \omega_y \cdot T/2 \\ \omega_z \cdot T/2 \end{pmatrix}$$

Hierbei entspricht $\omega_{x,y,z}$ dabei der jeweiligen Winkelgeschwindigkeit um die x-, y- und z-Achse, während T die Abtastzeit ist (mit T=1/Datenrate) umfasst. Der Rechenaufwand durch diese Näherung vorteilhafterweise erheblich reduziert.

Gemäß einer bevorzugten Ausführungsform ist vorgesehen, dass im dritten Verfahrensschritt der Orientierungsänderungswert durch eine Multiplikation, insbesondere eine Quaternionenmultiplikation, des Zwischenwerts mit dem im Register gespeicherten früheren Orientierungsänderungswertes gebildet wird. Der frühere Orientierungsänderungswert ist jeweils der in der zuvor ausgeführten Schleife von ersten, zweiten, dritten und vierten Verfahrensschritten ausgerechnete Orientierungsänderungswert, welcher im vierten Verfahrensschritt der vorherigen Schleife im Register abgespeichert wurde, oder der auf den Ursprungswert zurückgesetzte Orientierungsänderungswert. In jeder Schleife wird ein solcher vorheriger Orientierungsänderungswert mit den im zweiten Verfahrensschritt bestimmten Zwischenwert multipliziert. Das Produkt entspricht einem neuen Orientierungsänderungswert, welcher wiederum im Register abgelegt wird, so dass er in der nächsten Schleife wiederum als vorheriger Orientierungsänderungswert fungiert. Die Lageänderungen summieren sich daher in jeder Schleife sukzessive auf.

Gemäß einer bevorzugten Ausführungsform ist vorgesehen, dass in achten Verfahrensschritt mittels der externen Datenverarbeitungseinheit eine Mehrzahl von in fünften Verfahrensschritten ausgelesenen Orientierungsänderungswerten aufsummiert wird. In vorteilhafter Weise ist somit eine vergleichsweise einfache Berechnung des effektiven Orientierungsänderungswerts durch die externe Datenverarbeitungseinheit möglich, ohne dass hierfür eine hohe Abtastrate notwendig wäre. Ferner ist im Vergleich zum Stand der Technik eine Toleranzerhöhung hinsichtlich der Abtastzeitpunkte gegeben. Die Summierung der Mehrzahl von Orientierungsänderungswerte erfolgt vorzugsweise unter Beachtung der Bedingung $|\vec{q}_{eff}| = 1$ durch mehrmalige Normierung des effektiven Orientierungsänderungswertes.

Ein weiterer Gegenstand der vorliegenden Erfindung ist eine Drehratensensoreinheit zur Durchführung eines Verfahrens zur Auswertung von Ausgangssignalen aufweisend wenigstens einen Drehratensensor zur Bestimmung eines n-Tupels von Winkelgeschwindigkeiten, eine Auswerteschaltung zur Bestimmung eines Zwischenwertes in Abhängigkeit des n-Tupels von Winkelgeschwindigkeiten und ein Register zum Speichern eines Orientierungsänderungswertes, wobei die Auswerteschaltung ferner zum Berechnen eines neuen Orientierungsänderungswertes in Abhängigkeit des Zwischenwertes und in Abhängigkeit eines im Register gespeicherten früheren Orientierungsänderungswertes konfiguriert ist und wobei die Drehratensensoreinheit derart ausgebildet ist, dass der neue Orientierungsänderungswert von einer an die Drehratensensoreinheit angeschlossenen externen Datenverarbeitungseinheit auslesbar ist. In vorteilhafter Weise weist die erfindungsgemäße Drehratensensoreinheit das Register auf, in welchem jeweils der in einer vorherigen Schleife berechnete frühere Orientierungsänderungswert abzuspeichern ist, so dass in der nachfolgenden Schleife ein neuer auf diesem früheren Wert basierender Orientierungsänderungswert zu berechnen ist. Einerseits ist im Gegensatz zum Stand der Technik somit keine Abtastung der Drehratensensoreinheit mit einer vergleichsweise hohen und energieaufwändigen Abtastrate notwendig und andererseits ist dennoch sichergestellt, dass keine Messwerte verloren gehen. Ferner wird der benötigte Datentransfer erheblich reduziert. Die Batterielaufzeit eines portablen Geräts ist somit in erheblicher Weise zu steigern.

Gemäß einer bevorzugten Ausführungsform ist vorgesehen, dass die Auswerteschaltung zum Zurücksetzen des im Register gespeicherten früheren Orientierungsänderungswertes, wenn der neue Orientierungsänderungswert ausgelesen wird, eine Überwachungseinheit zur Überwachung der Länge des als Orientierungsänderungsvektor ausgeführten neuen Orientierungsänderungswertes eine Schwellwertüberschreitung anzeigt und/oder ein Zähler zum Zählen der von der Auswerteschaltung durchgeführten Berechnungen des neuen Orientierungsänderungswertes eine weitere Schwellwertüberschreitung anzeigt, konfiguriert ist. In vorteilhafter Weise wird somit die Genauigkeit der Drehratensensoreinheit erheblich gesteigert.

Gemäß einer bevorzugten Ausführungsform ist vorgesehen, dass der Drehratensensor vorzugsweise einen dreikanaligen Drehratensensor umfasst und/oder wobei die Auswerteschaltung in eine integrierte Schaltung in Form eines ASIC implementiert ist. In vorteilhafter Weise ist eine Implementierung der Auswerteschaltung in Hardware vergleichsweise stromsparend, sowie auf einer vergleichsweise geringen Waferfläche realisierbar. Insbesondere wird somit eine Aufbereitung der Winkelgeschwindigkeit ohne einen platzintensiven, kostenaufwändigen und energieaufwändigen Prozessor oder Mikrokontroller ($\mu$c) ermöglicht.

Ausführungsbeispiele der vorliegenden Erfindung sind in den Zeichnungen dargestellt und in der nachfolgenden Beschreibung näher erläutert.

Kurze Beschreibung der Zeichnungen

Es zeigen

Figur 1 eine schematische Ansicht eines Verfahrens gemäß einer ersten Ausführungsform der vorliegenden Erfindung,

Figur 2 eine schematische Ansicht eines Verfahrens gemäß einer zweiten Ausführungsform der vorliegenden Erfindung und

Figur 3 eine schematische Ansicht eines Verfahrens gemäß einer dritten Ausführungsform der vorliegenden Erfindung.

Ausführungsformen der Erfindung

In den verschiedenen Figuren sind gleiche Teile stets mit den gleichen Bezugzeichen versehen und werden daher in der Regel auch jeweils nur einmal benannt bzw. erwähnt.

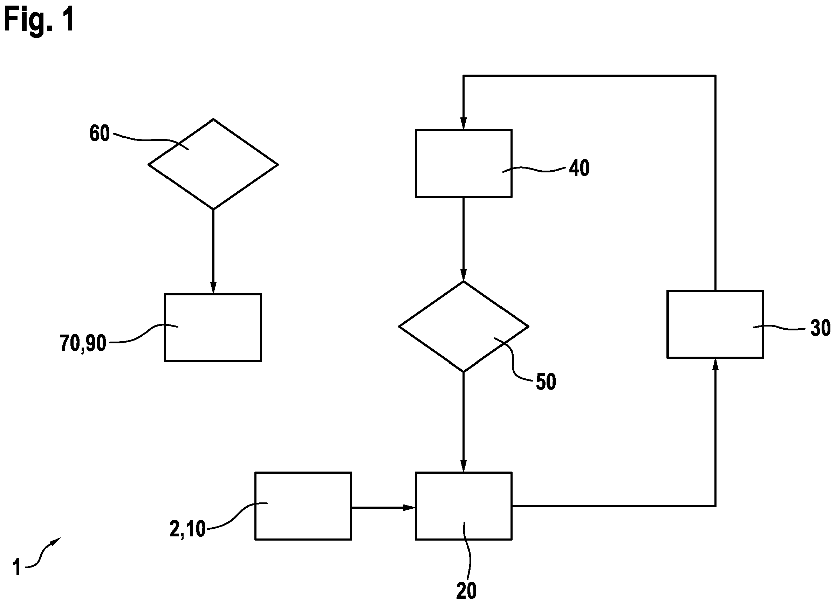

In **Figur 1** ist eine schematische Ansicht eines Verfahrens zur Auswertung von Ausgangssignalen einer Drehratensensoreinheit 1 gemäß einer ersten Ausführungsform der vorliegenden Erfindung dargestellt. Die Drehratensensoreinheit 1 weist einen Drehratensensor auf, welcher Drehraten bzw. Winkelgeschwindigkeiten $\omega_x$, $\omega_x$, $\omega_x$ um eine X-Achse, eine Y-Achse und eine Z-Achse misst, wobei die X-, Y- und Z-Achse voneinander unabhängig sind.

In einem ersten Verfahrensschritt 10 wird ein Tupel von drei Winkelgeschwindigkeitswerten $\omega_x$, $\omega_x$ und $\omega_x$ von dem Drehratensensor gemessen und bereitgestellt. In einem zweiten Verfahrensschritt 20 wird aus den drei Winkelgeschwindigkeitswerten $\omega_x$, $\omega_x$ und $\omega_x$ und unter Verwendung der Abtastzeit T (entspricht 1/Datenrate) jeweils eine Winkeländerung $\omega_x \cdot T$, $\omega_y \cdot T$ und $\omega_z \cdot T$ berechnet. In Abhängigkeit der Winkeländerung $\omega_x \cdot T$, $\omega_y \cdot T$, $\omega_z \cdot T$ wird dann ein Zwischenwert $q_l$ in Form eines Quaternions (Lageänderungsquaternion) aus der linearen Funktion

$$q_l \approx \begin{pmatrix} 1 \\ \omega_x \cdot {T}/{2} \\ \omega_y \cdot {T}/{2} \\ \omega_z \cdot {T}/{2} \end{pmatrix}$$ .

näherungsweise berechnet. In einem dritten Verfahrensschritt 30 wird zur Berechnung eines neuen Orientierungsänderungswertes $q_{neu}$ der Zwischenwert $q_l$ mit einem in einem Register der Drehratensensoreinheit 1 abgespeicherten früheren Orientierungsänderungswertes $q_{alt}$ im Rahmen einer Quaternionenmultiplikation multipliziert. Der vorherige Orientierungswert $q_{alt}$ stammt entweder aus einer vorhergehenden Schleife aus ersten, zweiten, dritten und vierten Verfahrensschritt 10, 20, 30, 40 oder wurde zuvor im Rahmen eines siebten Verfahrensschrittes 70 auf einen Ursprungswert $q_{l,0}$, insbesondere

$$q_{l,0} = \begin{pmatrix} 1 \\ 0 \\ 0 \\ 0 \end{pmatrix}$$

gesetzt. In einem nachfolgenden vierten Verfahrensschritt 40 wird der im dritten Verfahrensschritt 30 neu berechnete Orientierungsänderungswert $q_{neu}$ im Register abgespeichert. Hierbei wird der frühere Orientierungsänderungswert $q_{alt}$ überschrieben. Anschließend wird die Schleife aus erstem, zweitem, drittem und viertem Verfahrensschritt 10, 20, 30, 40 erneut gestartet. In einer Zwischenabfrage 50 wird in jeder Schleife gefragt, ob neue Winkelgeschwindigkeitswerte $\omega_x$, $\omega_x$ und $\omega_x$ vom Drehratensensor bereitgestellt wurden. Wenn neue Winkelgeschwindigkeitswerte $\omega_x$, $\omega_x$ und $\omega_x$ vorliegen, also eine Winkeländerung vom Drehratensensor messbar war (da eine Bewegung der Drehratensensoreinheit 1 erfolgte), wird im dritten Verfahrensschritt 30 der neue Orientierungsänderungswert $q_{neu}$ in Abhängigkeit eines im zweiten Verfahrensschritte 20 neu berechneten Zwischenwertes $q_l$ und in Abhängigkeit des im Register abgespeicherten früheren Orientierungsänderungswert $q_{alt}$ (entspricht dem in der vorherigen Schleife berechneten neuen Orientierungsänderungswert $q_{neu}$) berechnet. Die Schleifen aus ersten, zweiten, dritten und vierten Verfahrensschritten 10, 20, 30, 40 (und Zwischenanfrage 50) werden solange wiederholt, bis ein Zähler in einem sechstens Verfahrensschritt 60 einen weiteren konfigurierbaren und/oder vorbestimmten Schwellwert erreicht. Der Zähler zählt die Anzahl der im Rahmen des dritten Verfahrensschrittes 30 vorgenommenen Multiplikationen. Mit anderen Worten: Der Zähler zählt wie oft der neue Orientierungsänderungswert q neu berechnet wurde. Da mit jeder neuen Multiplikation die Größe des möglichen Fehlers steigt, wird mit der Begrenzung auf eine maximale Anzahl von dritten Verfahrensschritten 30 mittels des weiteren konfigurierbaren und/oder vorbestimmten Schwellwerts der Fehler begrenzt. Wenn im sechstens Verfahrensschritt 60 detektiert wird, dass der weitere konfigurierbare und/oder vorbestimmte Schwellwert t erreicht ist, wird der aktuelle Orientierungsänderungswert $q_{neu}$ in einem neunten Verfahrensschritt 90 in ein Ausgangsregister, beispielsweise ein Fifo-Speicher (First-In-First-Out), abgespeichert und der im Register gespeicherte frühere Orientierungsänderungswert $q_{alt}$ wird anschließend in einem siebten Verfahrensschritt 70 wieder auf den Ursprungswert $q_{l,0}$ gesetzt. Der im Ausgangsspeicher abgelegte Orientierungsänderungswert $q_{neu}$ wird von der externen Datenverarbeitungseinheit, insbesondere ein Prozessor eines portablen Gerätes, ausgelesen, so dass kein die Lageänderung beschreibender Wert verloren geht.

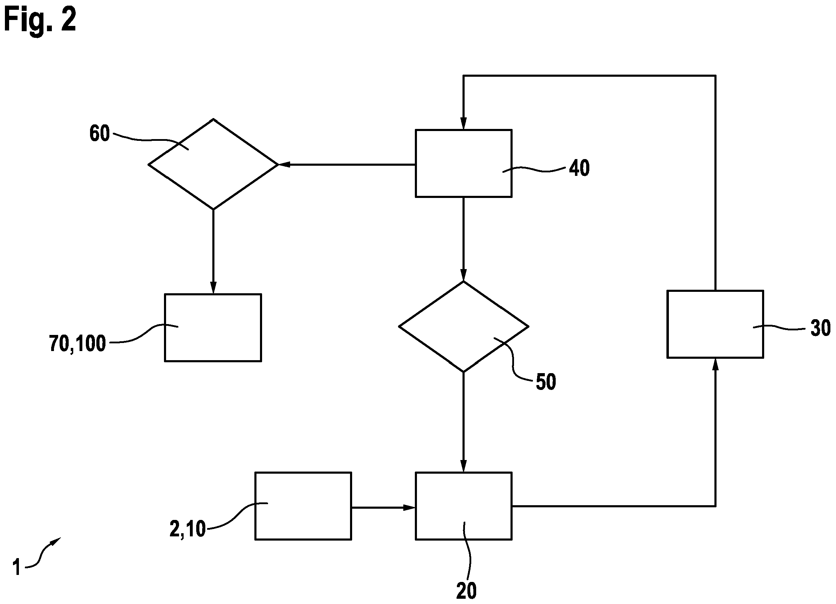

In **Figur 2** ist eine schematische Ansicht eines Verfahrens gemäß einer zweiten Ausführungsform der vorliegenden Erfindung dargestellt, wobei die zweite Ausführungsform im Wesentlichen der anhand Figur 1 illustrierten ersten Ausführungsform gleicht, wobei im Unterschied zur ersten Ausführungsform bei der zweiten Ausführungsform im sechstens Verfahrensschritt 60 die Länge des neuen Orientierungswertes $q_{neu}$ überwacht wird. Wenn die Länge des im dritten Verfahrensschritt 30 berechneten Orientierungsänderungsvektors $q_{neu}$ einen konfigurierbaren und/oder vorbestimmten Schwellwert überschreitet, wird in einem zehnten Verfahrensschritt 100 ein Interrupt-Signal erzeugt. Der frühere Orientierungsänderungswert $q_{alt}$ wird dann im siebten Verfahrensschritt 70 wieder auf den Ursprungswert $q_{l,0}$ gesetzt. Der aktuelle Orientierungsänderungswert $q_{neu}$ wird wahlweise verworfen, von der externen Datenverarbeitungsanlage ausgelesen und/oder in dem Ausgangsregister, beispielsweise ein Fifo-Speicher (First-In-First-Out), abgespeichert.

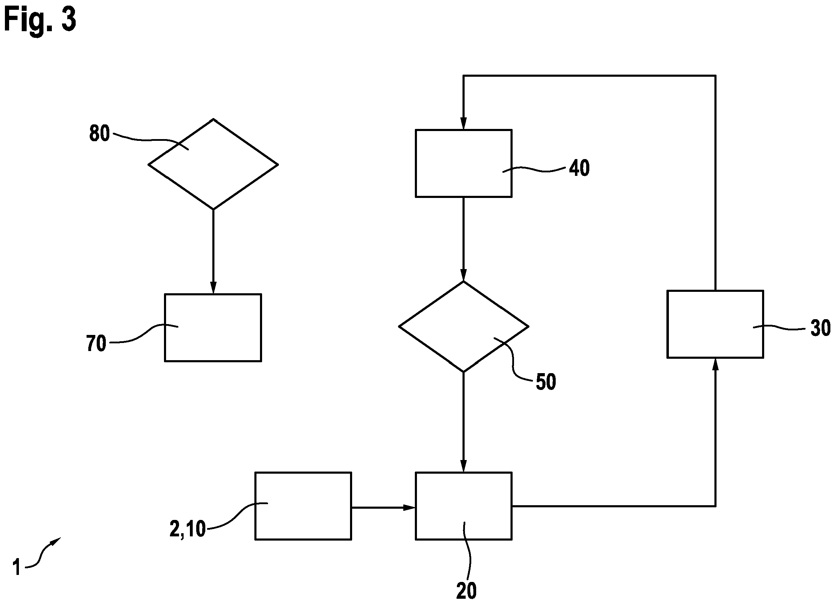

In **Figur 3** eine schematische Ansicht eines Verfahrens gemäß einer dritten Ausführungsform der vorliegenden Erfindung dargestellt, wobei die dritte Ausführungsform im Wesentlichen der anhand Figur 1 illustrierten ersten Ausführungsform gleicht, wobei im Unterschied zur ersten Ausführungsform bei der dritten Ausführungsform die Schleifen aus ersten, zweiten, dritten und vierten Verfahrensschritt 10, 20, 30, 40 (und dem Zwischenschritt 50) solange wiederholt werden, bis die externe Datenverarbeitungseinheit den neuen Orientierungsänderungswert $q_{neu}$ in einem fünften Verfahrensschritt 80 ausliest bzw. ein Auslesen durch die externe Datenverarbeitungseinheit detektiert wird. Alternativ ist auch denkbar, dass dabei der im Register gespeicherte frühere Orientierungsänderungswert $q_{alt}$ von der externen Datenverarbeitungsanlage ausgelesen wird. Der ausgelesene Orientierungsänderungswert $q_{neu}$ repräsentiert nun alle Lageänderungen seit dem letzten Auslesen. Nach dem Auslesen des Orientierungsänderungswerts $q_{neu}$ wird der im Register abgespeicherte frühere Orientierungsänderungswert $q_{alt}$ in einem siebten Verfahrensschritt 70 wieder auf den Ursprungswert $q_{l,0}$ gesetzt. Denkbar ist, dass in einem achten Verfahrensschritt mittels der externen Datenverarbeitungseinheit eine Mehrzahl von in fünften Verfahrensschritten 80 aus der Drehratensensoreinheit 1 ausgelesenen Orientierungsänderungswerten $q_{neu}^{i}$ innerhalb der externen Datenverarbeitungseinheit zu einem effektiven Orientierungsänderungswert $q_{eff}$ aufsummiert werden.

**Patentansprüche**

1. Verfahren zur Auswertung von Ausgangssignalen einer Drehratensensoreinheit (1) mit den Schritten: Bereitstellen eines n-Tupels von mittels wenigstens eines Drehratensensors der Drehratensensoreinheit gemessenen Winkelgeschwindigkeitswerten in einem ersten Verfahrensschritt (10), wobei n einer Zahl von um voneinander unabhängigen Drehachsen gemessenen Winkelgeschwindigkeiten entspricht; Bestimmen eines Zwischenvektors in Form eines Lageänderungsvektors in Abhängigkeit des n-Tupels von Winkelgeschwindigkeitswerten in einem zweiten Verfahrensschritt (20); Berechnen eines neuen Orientierungsänderungsvektors in Abhängigkeit des Zwischenvektors und in Abhängigkeit eines in einem Register der Drehratensensoreinheit gespeicherten früheren Orientierungsänderungsvektors in einem dritten Verfahrensschritt (30); und Speichern des neuen Orientierungsänderungsvektors im Register in einem vierten Verfahrensschritt (40), wobei der erste, zweite, dritte und vierte Verfahrensschritt (10, 20, 30, 40) solange wiederholt werden, bis in einem sechsten Verfahrensschritt (60) eine Schwellwertüberschreitung detektiert wird, wobei, wenn im sechsten Verfahrensschritt eine Schwellwertüberschreitung detektiert wurde, der im Register gespeicherte Orientierungsänderungsvektor in einem siebten Verfahrensschritt (70) auf einen Ursprungswert gesetzt wird und das Verfahren mit dem ersten Verfahrensschritt (10) erneut gestartet wird, wobei der neue und/oder der frühere Orientierungsänderungsvektor in einem Ausgangsregister gespeichert wird, bevor der im Register gespeicherte Orientierungsänderungsvektor durch das Zurücksetzen auf den Ursprungswert verworfen wird.

2. Verfahren nach Anspruch 1, wobei in einem fünften Verfahrensschritt (80) der neue Orientierungsänderungsvektor von einer an die Drehratensensoreinheit (1) angeschlossenen externen Datenverarbeitungseinheit ausgelesen wird.

3. Verfahren nach einem der vorhergehenden Ansprüche, wobei der Orientierungsänderungsvektor ein Quaternion umfasst.

4. Verfahren nach einem der vorhergehenden Ansprüche, wobei im sechsten Verfahrensschritt (60) detektiert wird, ob die Länge des im dritten Verfahrensschritt (30) berechneten Orientierungsänderungsvektors einen konfigurierbaren und/oder vorbestimmten Schwellwert überschreitet.

5. Verfahren nach einem der vorhergehenden Ansprüche, wobei die Anzahl der durchgeführten dritten Verfahrensschritte (30) seit der im Register gespeicherte frühere Orientierungsänderungsvektor zuletzt auf einen Ursprungswert gesetzt wurde mittels eines Zählers gezählt wird und wobei im sechsten Verfahrensschritt (60) detektiert wird, ob der Zähler einen einen konfigurierbaren und/oder vorbestimmten weiteren Schwellwert überschreitet.

6. Verfahren nach einem der vorhergehenden Ansprüche, wobei im zweiten Verfahrensschritt (20) der Zwischenvektor als lineare Funktion des n-Tupels von Winkelgeschwindigkeitswerten berechnet wird und/oder wobei im dritten Verfahrensschritt (30) der neue Orientierungsänderungsvektor durch eine Multiplikation, insbesondere eine Quaternionenmultiplikation, des Zwischenvektors mit dem im Register gespeicherten früheren Orientierungsänderungsvektor berechnet wird.

7. Verfahren nach einem der vorhergehenden Ansprüche, wobei in einem achten Verfahrensschritt mittels der externen Datenverarbeitungseinheit eine Mehrzahl von im fünften Verfahrensschritten (80) aus der Drehratensensoreinheit (1) ausgelesenen Orientierungsänderungsvektoren zu einem effektiven Orientierungsänderungsvektor aufsummiert werden.

8.  Drehratensensoreinheit (1) zur Durchführung eines Verfahrens gemäß einem der vorhergehenden Ansprüche aufweisend

    wenigstens einen Drehratensensor (2) zur Bestimmung eines n-Tupels von Winkelgeschwindigkeiten, wobei n einer Zahl von um voneinander unabhängigen Drehachsen gemessenen Winkelgeschwindigkeiten entspricht,

    eine Auswerteschaltung, die zum Durchführen der Schritte eines Verfahrens gemäß einem der Ansprüche 1 oder 3-6 konfiguriert ist, und

    ein Register zum Speichern eines Orientierungsänderungsvektors,

    wobei die Drehratensensoreinheit (1) derart ausgebildet ist, dass der neue Orientierungsänderungsvektor von einer an die Drehratensensoreinheit (1) angeschlossenen externen Datenverarbeitungseinheit auslesbar ist.

9.  Drehratensensoreinheit (1) nach Anspruch 8, wobei in der Auswerteschaltung zum Zurücksetzen des im Register gespeicherten früheren Orientierungsänderungsvektors, wenn der neue Orientierungsänderungsvektor ausgelesen wird, eine Überwachungseinheit dazu ausgebildet ist, zur Überwachung der Länge des Orientierungsänderungsvektors eine Schwellwertüberschreitung anzuzeigen und/oder

    wobei die Auswerteschaltung einen Zähler zum Zählen der von der Auswerteschaltung durchgeführten Berechnungen des neuen Orientierungsänderungsvektors aufweist und zum Anzeigen einer Schwellwertüberschreitung des Zählers konfiguriert ist und/oder

    wobei der Drehratensensor einen dreikanaligen Drehratensensor umfasst und/oder

    wobei die Auswerteschaltung in eine integrierte Schaltung in Form eines ASIC implementiert ist.

## Claims

1.  Method for evaluating output signals from a rotation rate sensor unit (1), having the steps of: providing an n-tuple of angular velocity values measured by means of at least one rotation rate sensor of the rotation rate sensor unit in a first method step (10), wherein n corresponds to a number of angular velocities measured about axes of rotation which are independent of one another; determining an intermediate vector in the form of a position change vector on the basis of the n-tuple of angular velocity values in a second method step (20); calculating a new orientation change vector on the basis of the intermediate vector and on the basis of an earlier orientation change vector stored in a register of the rotation rate sensor unit in a third method step (30); and storing the new orientation change vector in the register in a fourth method step (40), wherein the first, second, third and fourth method steps (10, 20, 30, 40) are repeated until it is detected in a sixth method step (60) that a threshold value has been exceeded, wherein, if it has been detected in the sixth method step that a threshold value has been exceeded, the orientation change vector stored in the register is set to an original value in a seventh method step (70), and the method is restarted with the first method step (10), wherein the new and/or earlier orientation change vector is stored in an output register before the orientation change vector stored in the register is discarded by resetting to the original value.

2.  Method according to Claim 1, wherein the new orientation change vector is read from an external data processing unit connected to the rotation rate sensor unit (1) in a fifth method step (80).

3.  Method according to one of the preceding claims, wherein the orientation change vector comprises a quaternion.

4.  Method according to one of the preceding claims, wherein in the sixth method step (60) it is detected whether the length of the orientation change vector calculated in the third method step (30) exceeds a configurable and/or predetermined threshold value.

5.  Method according to one of the preceding claims, wherein the number of third method steps (30) carried out since the earlier orientation change vector stored in the register was last set to an original value is counted by means of a counter, and wherein in the sixth method step (60) it is detected whether the counter exceeds a configurable and/or predetermined further threshold value.

6.  Method according to one of the preceding claims, wherein the intermediate vector is calculated in the second method step (20) as a linear function of the n-tuple of angular velocity values, and/or wherein the new orientation change vector is calculated in the third method step (30) by means of a multiplication, in particular a quaternion multiplication, of the intermediate vector by the earlier orientation change vector stored in the register.

7.  Method according to one of the preceding claims, wherein a plurality of orientation change vectors read from the rotation rate sensor unit (1) in the fifth method step (80) are summed by means of the external data processing unit

**EP 2 745 077 B1**

in an eighth method step to form an effective orientation change vector.

8. Rotation rate sensor unit (1) for carrying out a method according to one of the preceding claims, having at least one rotation rate sensor (2) for determining an n-tuple of angular velocities, wherein n corresponds to a number of angular velocities measured about axes of rotation which are independent of one another, an evaluation circuit which is configured to carry out the steps of a method according to one of Claims 1 and 3-6, and a register for storing an orientation change vector, wherein the rotation rate sensor unit (1) is designed in such a manner that the new orientation change vector can be read from an external data processing unit connected to the rotation rate sensor unit (1).

9. Rotation rate sensor unit (1) according to Claim 8, wherein, in the evaluation circuit for resetting the earlier orientation change vector stored in the register when the new orientation change vector is read, a monitoring unit is designed, for the purpose of monitoring the length of the orientation change vector, to display when the threshold value has been exceeded, and/or wherein the evaluation circuit has a counter for counting the calculations of the new orientation change vector which are carried out by the evaluation circuit and is configured to display when the threshold value has been exceeded by the counter, and/or wherein the rotation rate sensor comprises a three-channel rotation rate sensor, and/or wherein the evaluation circuit is implemented in an integrated circuit in the form of an ASIC.

## Revendications

1. Procédé d'interprétation de signaux de sortie d'une unité de détection de vitesse de rotation (1), comprenant les étapes suivantes : fourniture d'un n-uplet de valeurs de vitesse angulaire mesurées au moyen d'au moins d'un capteur de vitesse de rotation de l'unité de détection de vitesse de rotation dans une première étape de procédé (10), n correspondant à un nombre de vitesses angulaires mesurées autour d'axes de rotation indépendants les uns des autres ; détermination d'un vecteur intermédiaire sous la forme d'un vecteur de changement de position en fonction du n-uplet de valeurs de vitesses angulaires dans une deuxième étape de procédé (20) ; calcul d'un nouveau vecteur de changement d'orientation en fonction du vecteur intermédiaire et en fonction d'un vecteur de changement d'orientation précédent enregistré dans un registre de l'unité de détection de vitesse de rotation dans une troisième étape de procédé (30) ; et enregistrement du nouveau vecteur de changement d'orientation dans le registre dans une quatrième étape de procédé (40), les première, deuxième, troisième et quatrième étapes de procédé (10, 20, 30, 40) étant répétées jusqu'à ce qu'un dépassement de valeur de seuil soit détecté dans une sixième étape de procédé (60), lorsqu'un dépassement de valeur de seuil a été détecté dans la sixième étape de procédé, le vecteur de changement d'orientation enregistré dans le registre étant mis à une valeur d'origine dans une septième étape de procédé (70) et le procédé étant redémarré par la première étape de procédé (10), le vecteur de changement d'orientation nouveau et/ou précédent étant enregistré dans un registre de sortie avant que le vecteur de changement d'orientation enregistré dans le registre soit rejeté par le rétablissement de la valeur d'origine.

2. Procédé selon la revendication 1, le nouveau vecteur de changement d'orientation étant, dans une cinquième étape de procédé (80), lu par une unité de traitement de données externe connectée à l'unité de détection de vitesse de rotation (1).

3. Procédé selon l'une des revendications précédentes, le vecteur de changement d'orientation comprenant un quaternion.

4. Procédé selon l'une des revendications précédentes, la sixième étape de procédé (60) incluant la détection si la longueur du vecteur de changement d'orientation calculé dans la troisième étape de procédé (30) dépasse une valeur de seuil configurable et/ou prédéfinie.

5. Procédé selon l'une des revendications précédentes, le nombre de troisièmes étapes de procédé (30) exécutées depuis que le vecteur de changement d'orientation précédent enregistré dans le registre a été pour la dernière fois remis à une valeur d'origine étant compté au moyen d'un compteur et la sixième étape de procédé (60) incluant la détection si le compteur dépasse une valeur de seuil configurable et/ou prédéfinie supplémentaire.

6. Procédé selon l'une des revendications précédentes, le vecteur intermédiaire étant, dans la deuxième étape de procédé (20), calculé sous la forme d'une fonction linéaire du n-uplet de valeurs de vitesse angulaire et/ou, dans la troisième étape de procédé (30), le nouveau vecteur de changement d'orientation étant calculé par une multiplication, notamment une multiplication de quaternions, du vecteur intermédiaire par le vecteur de changement d'orien-

9

tation enregistré dans le registre.

**7.** Procédé selon l'une des revendications précédentes, une pluralité de vecteurs de changement d'orientation lus depuis l'unité de détection de vitesse de rotation (1) dans la cinquième étape de procédé (80) étant, dans une huitième étape de procédé, additionnés en un vecteur de changement d'orientation effectif.

**8.** Unité de détection de vitesse de rotation (1) destinée à mettre en oeuvre un procédé selon l'une des revendications précédentes, possédant au moins un capteur de vitesse de rotation (2) destiné à déterminer un n-uplet de valeurs de vitesse, n correspondant à un nombre de vitesses angulaires mesurées autour d'axes de rotation indépendants les uns des autres, un circuit d'interprétation qui est configuré pour exécuter les étapes d'un procédé selon l'une des revendications 1 et 3 à 6 et un registre destiné à enregistrer un vecteur de changement d'orientation, l'unité de détection de vitesse de rotation (1) étant configurée de telle sorte que le nouveau vecteur de changement d'orientation peut être lu par une unité de traitement de données externe connectée à l'unité de détection de vitesse de rotation (1).

**9.** Unité de détection de vitesse de rotation (1) selon la revendication 8, une unité de surveillance dans le circuit d'interprétation, en vue de rétablir le vecteur de changement d'orientation précédent enregistré dans le registre lorsque le nouveau vecteur de changement d'orientation est lu, étant configurée pour indiquer un dépassement de valeur de seuil en vue de surveiller la longueur du vecteur de changement d'orientation et/ou le circuit d'interprétation possédant un compteur destiné à compter les calculs du nouveau vecteur de changement d'orientation effectués par le circuit d'interprétation et pour indiquer un dépassement de valeur de seuil du compteur et/ou le capteur de vitesse de rotation comportant un capteur de vitesse de rotation à trois canaux et/ou le circuit d'interprétation étant mis en oeuvre dans un circuit intégré sous la forme d'un ASIC.

# Fig. 1

# Fig. 2

EP 2 745 077 B1

**Fig. 3**

EP 2 745 077 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10108196 A1
- DE 102007060942 A1
- US 3231726 A
- US 2009326851 A1